(19) **Europäisches Patentamt**
**European Patent Office**
**Office européen des brevets**

(11) **EP 1 347 904 B1**

(12) **EUROPÄISCHE PATENTSCHRIFT**

(45) Veröffentlichungstag und Bekanntmachung des Hinweises auf die Patenterteilung:
**22.08.2012 Patentblatt 2012/34**

(51) Int Cl.:
***B60T 8/175*** *(2006.01)*

(21) Anmeldenummer: **01991681.6**

(22) Anmeldetag: **22.12.2001**

(86) Internationale Anmeldenummer:
**PCT/DE2001/004908**

(87) Internationale Veröffentlichungsnummer:
**WO 2002/053433 (11.07.2002 Gazette 2002/28)**

(54) **SYSTEM UND VERFAHREN ZUR STEUERUNG UND/ODER REGELUNG DES FAHRVERHALTENS EINES KRAFTFAHRZEUGS**

SYSTEM AND METHOD FOR CONTROLLING AND/OR REGULATING THE HANDLING CHARACTERISTICS OF A MOTOR VEHICLE

SYSTEME ET PROCEDE DE COMMANDE ET/OU DE REGULATION DU COMPORTEMENT DE CONDUITE D'UN VEHICULE AUTOMOBILE

(84) Benannte Vertragsstaaten:
**DE FR GB**

(30) Priorität: **30.12.2000 DE 10065774**

(43) Veröffentlichungstag der Anmeldung:
**01.10.2003 Patentblatt 2003/40**

(73) Patentinhaber: **ROBERT BOSCH GMBH**
**70442 Stuttgart (DE)**

(72) Erfinder:
• **SAUTER, Thomas**
**71686 Remseck (DE)**
• **ZOEBELE, Andreas**
**71706 Markgroeningen (DE)**
• **SCHMITT, Johannes**
**71706 Markgroeningen (DE)**
• **HAAS, Hardy**
**71706 Markgroeningen (DE)**

(74) Vertreter: **Gleiss & Grosse**
**Patentanwälte Rechtsanwälte**
**Leitzstrasse 45**
**70469 Stuttgart (DE)**

(56) Entgegenhaltungen:
| | |
|---|---|
| EP-A- 0 529 280 | EP-A- 0 552 456 |
| EP-A- 0 884 230 | DE-A- 3 935 588 |
| DE-A- 19 744 725 | DE-A- 19 750 501 |
| DE-C- 19 812 237 | US-A- 5 884 719 |

**Beschreibung**

Die vorliegende Erfindung betrifft ein System zur Steuerung und/oder Regelung des Fahrverhaltens eines Kraftfahrzeugs mit wenigstens zwei Rädern, umfassend: wenigstens eine Sensoreinrichtung, welche Raddrehzahlen von wenigstens zwei Rädern erfasst, und eine Datenverarbeitungseinrichtung, welche nach Maßgabe der erfassten Raddrehzahlen wenigstens eine Bewegungsbeziehung von wenigstens zwei Rädern zueinander bestimmt, wobei die Datenverarbeitungseinrichtung weiterhin nach Maßgabe der wenigstens einen bestimmten Bewegungsbeziehung einen geometrischen Radschlupf als Kurvenfahrt-Bewegungsgröße des Kraftfahrzeugs ermittelt und mit diesem einen aus den erfassten Raddrehzahlen errechneten Radschlupf korrigiert.

Die vorliegende Erfindung betrifft überdies ein Verfahren zur Steuerung und/oder Regelung des Fahrverhaltens eines Kraftfahrzeugs mit wenigstens zwei Rädern, vorzugsweise zur Ausführung durch das erfindungsgemäße System, welches folgende Schritte umfasst: Erfassung von Raddrehzahlen von wenigstens zwei Rädern, und Bestimmen wenigstens einer Bewegungsbeziehung von wenigstens zwei Rädern nach Maßgabe der erfassten Raddrehzahlen, Ermitteln eines geometrischen Radschlupfs als Kurvenfahrt-Bewegungsgröße des Kraftfahrzeugs nach Maßgabe der bestimmten Bewegungsbeziehung und Korrigieren eines ermittelten Radschlupfs bei Kurvenfahrt um den ermittelten geometrischen Radschlupf.

Stand der Technik

Zur Regelung des Fahrverhaltens eines Kraftfahrzeugs sind Systeme, wie ASR, ABS und ESP bekannt. Diese Systeme greifen in den Betriebszustand des Fahrzeugs in der Regel schlupfbasiert ein, das heißt der aktuelle Radschlupf wird sensorisch überwacht und durch Änderung eines vom Motor abgegebenen Antriebsmoments und/oder durch Änderung von Radbremsdrücken in einem günstigen Bereich gehalten. Dies ist in der Regel ein Bereich, in dem ein möglichst hoher Reibwert zwischen Rad und Fahruntergrund ausgenutzt werden kann.

Im Gegensatz zu einer Geradeausfahrt können bei Kurvenfahrt aufgrund unterschiedlicher Radgeschwindigkeiten der einzelnen Fahrzeugräder Fehler bei der Ermittlung des tatsächlich auftretenden Radschlupfs gemacht werden.

Ein derartiger Fehler kommt aufgrund der Einhaltung der sogenannten Ackermann-Bedingung bei heute üblichen Achsschenkellenkungen zustande. Die Ackermann-Bedingung definiert die Stellung der einzelnen Räder eines Kraftfahrzeugs bei Kurvenfahrt und verlangt, dass sich die verlängerten Drehachsen aller Räder eines Kraftfahrzeugs in einem Punkt schneiden. Dieser Punkt ist dann der Momentanpol, um den das Fahrzeug dreht. Da die Hinterräder eines Kraftfahrzeugs in der Regel nicht lenkbar sind, liegt der Momentanpol üblicherweise auf einer Verlängerung der Drehachse der im Wesentlichen koaxial angeordneten Hinterräder. Alle Räder eines Fahrzeugs haben dann einen unterschiedlichen Abstand vom Momentanpol und weisen daher bei Kurvenfahrt unterschiedliche Raddrehzahlen beziehungsweise Radgeschwindigkeiten auf, woraus Vorrichtungen, welche den Radschlupf anhand eines Vergleichs von Raddrehzahlen unterschiedlicher Räder bestimmen, einen scheinbaren Radschlupf feststellen, ohne dass dieser tatsächlich besteht.

Bei Fahrzeugen mit Frontantrieb wird aufgrund des geometrischen Schlupfes fälschlicherweise auf zu hohen, das heißt positiven, Schlupf erkannt, während bei Fahrzeugen mit Heckantrieb auf zu geringen Schlupf, das heißt Schleppschlupf, erkannt wird.

Das Dokument DE 197 50 501 A offenbart ein System sowie ein Verfahren zur Steuerung und/oder Regelung des Fahrverhaltens eines Kraftfahrzeugs gemäß dem Oberbegriff der Ansprüche 1 und 9.

Das Dokument EP 0 552 456 A offenbart eine einfache Korrektur des Radschlupfs bei Kurvenfahrt anhand einer gemittelten Radgeschwindigkeit, bzw. Radgeschwindigkeitsdifferenz.

Die Aufgabe der vorliegenden Erfindung besteht darin, eine Korrektur des Radschlupfs bei Kurvenfahrt durch eine genauere Bestimmung des geometrischen Radschlupf zu verbessern.

Die Aufgabe wird durch ein System bzw. ein Verfahren gemäß den unabhängigen Ansprüchen 1 und 9 gelöst.

Vorteile der Erfindung

Dieses System ermöglicht eine sehr genaue Ermittlung der wenigstens einen Kurvenfahrt-Bewegungsgröße mit geringem sensortechnischen Aufwand. Dabei werden lediglich Raddrehzahlen erfasst und der Ermittlung der wenigstens einen Kurvenfahrt-Bewegungsgröße so die tatsächlich zwischen Fahruntergrund und Rädern herrschende Bedingungen zugrundegelegt. Mit der vorliegenden Erfindung ist es beispielsweise möglich, anhand der genau ermittelten Kurvenfahrt-Bewegungsgröße Verfahren zur Steuerungund/oder Regelung des Fahrverhaltens des Fahrzeugs mit größerer Genauigkeit als bisher durchzuführen.

Eine geeignete Bewegungsbeziehung ist beispielsweise eine Drehzahldifferenz zwischen zwei Rädern, bevorzugt zwischen zwei in Fahrzeugquerrichtung mit Abstand voneinander angeordneten Rädern, wie zum Beispiel zwischen zwei Vorderrädern und/oder zwischen zwei Hinterrädern. Aus dieser Drehzahldifferenz lässt sich unmittelbar ableiten, dass sich das Fahrzeug in einer Kurvenfahrt befindet. Dabei kann die Drehzahldifferenz der gelenkten Räder im eingelenkten Zustand von der Drehzahldifferenz der ungelenkten Räder verschieden sein. Aufgrund der Proportionalität zwischen Raddrehzahl und translatorischer Radgeschwindigkeit gilt das oben und im Folgenden Gesagte sowohl für Drehzahlen als auch für translatorische Radgeschwindigkeiten, das heißt für die Geschwindigkeit eines Radmittelpunkts.

Aus einer solchen Drehzahldifferenz lässt sich eine Giergeschwindigkeit und/oder ein Kurvenradius und/oder eine Querbeschleunigung und/oder ein geometrischer Schlupf des Fahrzeugs als Kurvenfahrt-Bewegungsgröße ermitteln. Mit geometrischem Schlupf ist dabei der zuvor erläuterte, aufgrund der Einhaltung der Ackermann-Bedingung auftretende Scheinschlupf bezeichnet.

Zur Ermittlung der Drehzahldifferenz zwischen zwei Rädern kann bei dem erfindungsgemäßen System wenigstens zwei in Fahrzeugquerrichtung einander gegenüberliegenden Rädern, bevorzugt zusätzlich wenigstens zwei in Fahrzeuglängsrichtung hintereinander angeordneten Rädern, besonders bevorzugt jedem Rad des Fahrzeugs, je eine Sensoreinrichtung zugeordnet sein. Je mehr Rädern eine derartige Sensoreinrichtung zugeordnet ist, desto genauer kann die wenigstens eine Kurvenfahrt-Bewegungsgröße ermittelt werden.

Als geeignete Sensoreinrichtung kommt eine Reifen-Sensoreinrichtung und/oder eine Radlager-Sensoreinrichtung in Frage. Der Vorteil dieser Sensoreinrichtungen liegt darin, dass sie Raddrehzahlen unmittelbar am Rad erfassen können und darüber hinaus noch in der Lage sind, zusätzliche Informationen über zwischen Rad und Fahrbahn wirkende Kräfte zu erfassen. Selbstverständlich ist die Erfassung der Raddrehzahl auch mit einem herkömmlichen Drehzahlfühler, etwa bestehend aus Impulsring und Sensor denkbar, wie er etwa bei Antiblockiersystemen eingesetzt wird. Vorteilhaft an der Erfindung ist in diesem Zusammenhang, dass lediglich eine einzige Art von Sensor, nämlich ein die Raddrehzahl erfassender Sensor, ausreicht.

Um die erfassten und/oder ermittelten Werte für eine Verarbeitung zur Verfügung stellen zu können, kann das System eine Speichereinrichtung umfassen. Vorteilhafterweise sind in dieser Speichereinrichtung vorbestimmte Fahrzeuggeometriedaten hinterlegt, anhand derer zusammen mit den erfassten Raddrehzahlen eine Ermittlung der wenigstens einen Kurvenfahrt-Bewegungsgröße durchgeführt werden kann.

Nach der vorliegenden Erfindung führt die Datenverarbeitungseinrichtung nach Maßgabe der ermittelten wenigstens einen Kurvenfahrt-Bewegungsgröße eine Korrektur einer Radschlupfs durch.

Darüber hinaus kann die Datenverarbeitungseinrichtung zur Erhöhung der Verkehrssicherheit nach Maßgabe der ermittelten Kurvenfahrt-Bewegungsgröße ein Stellsignal ausgeben, wobei das System vorteilhafterweise weiterhin eine Stelleinrichtung umfasst, die einen Betriebszustand des Kraftfahrzeugs nach Maßgabe des Stellsignals beeinflusst. Danach kann etwa eine Regelung der Fahrzeuggeschwindigkeit nach Maßgabe der ermittelten Giergeschwindigkeit und/oder der ermittelten Querbeschleunigung erfolgen.

Die Anzahl der zur Realisierung des erfindungsgemäßen Systems benötigten Komponenten kann dadurch gering gehalten werden, dass die Datenverarbeitungseinrichtung und/oder die Stelleinrichtung einer Vorrichtung zur Steuerung und/oder Regelung des Fahrverhaltens eines Kraftfahrzeugs, wie zum Beispiel einem ASR-, einem Antiblokkier- oder einem ESP-System, zugeordnet ist beziehungsweise sind.

Eine Verbesserung der Steuerung und/oder der Regelung des Fahrverhaltens durch eine entsprechende Vorrichtung kann dadurch erfolgen, dass die Vorrichtung zur Steuerung und/oder Regelung des Fahrverhaltens eines Kraftfahrzeugs in Abhängigkeit von der ermittelten wenigstens einen Kurvenfahrt-Bewegungsgröße Steuer- und/oder Regelalgorithmen auswählt.

Beispielsweise kann in einem Fall die Stellvorrichtung einem ASR-System zugeordnet beziehungsweise Teil eines ASR-Systems sein, welches in Abhängigkeit vom ermittelten Kurvenradius, vorzugsweise unter Berücksichtigung der Fahrzeuggeschwindigkeit, zwischen traktionspriorisierter und fahrstabilitätspriorisierter Regelung schaltet. So kann etwa bei kleinen Kurvenradien derart geregelt werden, dass eine möglichst hohe Traktion erreicht wird, während bei größeren Kurvenradien - und gegebenenfalls bei hohen Fahrzeuggeschwindigkeiten - einer hohen Fahrstabilität der Vorzug eingeräumt wird.

Mit anderen Worten werden die Vorteile der Erfindung erreicht durch ein System zur Steuerung und/oder Regelung des Fahrverhaltens eines Kraftfahrzeugs mit wenigstens einem Rad, wobei aus dem erfassten Radbewegungsverhalten der geometrische Schlupf und/oder der Kurvenradius und/oder die Giergeschwindigkeit des Fahrzeugs ermittelt wird.

Die vorliegende Erfindung umfasst weiterhin einen Schritt eines Ermittelns wenigstens einer Kurvenfahrt-Bewegungsgröße des Fahrzeugs nach Maßgabe der bestimmten Bewegungsbeziehung. Mit dem erfindungsgemäßen verfahren werden auch die zuvor im Zusammenhang mit dem erfindungsgemäßen System genannten Vorteile erreicht, weshalb zur ergänzenden Erläuterung des Verfahrens auf die Beschreibung des erfindungsgemäßen Systems ausdrücklich verwiesen wird.

Wie bereits dargelegt wurde, ist es für die Ermittlung der wenigstens einen Kurvenfahrt-Bewegungsgröße vorteilhaft, wenn als Bewegungsbeziehung eine Drehzahldifferenz zwischen zwei Rädern bestimmt wird. Dabei handelt es sich bevorzugt um eine Drehzahldifferenz zwischen zwei in Fahrzeugquerrichtung mit Abstand voneinander angeordneten Rädern, etwa zwischen den Vorderrädern und/oder zwischen den Hinterrädern.

Eine besonders genaue Ermittlung der wenigstens einen Kurvenfahrt-Bewegungsgröße wird dadurch ermöglicht, dass die Raddrehzahl möglichst vieler, bevorzugt aller, Fahrzeugräder erfasst wird.

Besonders einfach kann als Kurvenfahrt-Bewegungsgröße eine Giergeschwindigkeit des Fahrzeugs aus einer Drehzahldifferenz zwischen zwei in Fahrzeugquerrichtung mit Abstand voneinander angeordneten Rädern errechnet werden. Dazu sind zusätzlich lediglich Kenntnisse über die geometrischen Verhältnisse am Fahrzeug erforderlich. Diese können in einer Speichereinrichtung hinterlegt sein. Mit Hilfe der Giergeschwindigkeit kann weiterhin ein Kurvenradius als Kurvenfahrt-Bewegungsgröße ermittelt werden. Zur Ermittlung des Kurvenradius reicht beispielsweise die Kenntnis einer mittleren Geschwindigkeit nicht angetriebener Räder und der Giergeschwindigkeit aus, wobei die mittlere Geschwindigkeit nicht angetriebener Räder aus entsprechenden Raddrehzahlen dieser Räder durch Mittelwertbildung berechnet werden kann. Unter Umständen ist auch eine Ermittlung des Kurvenradius unmittelbar aus den Drehzahlen der Fahrzeugräder unter Berücksichtigung der Ackermann-Bedingung oder der Spurweite denkbar. Ebenso kann aus der mittleren Geschwindigkeit nicht angetriebener Räder und der Giergeschwindigkeit eine Querbeschleunigung des Fahrzeugs als Kurvenfahrt-Bewegungsgröße ermittelt werden.

Darüber hinaus kann, wie im Zusammenhang mit dem erfindungsgemäßen System beschrieben wurde, der durch die Einhaltung der Ackermann-Bedingung bei Kurvenfahrt hervorgerufene geometrische Schlupf des Fahrzeugs als Kurvenfahrt-Bewegungsgröße ermittelt werden. Bei Kenntnis dieses Scheinschlupfes können aus den Raddrehzahlen abgeleitete Größen, wie zum Beispiel Fahrzeuggeschwindigkeit und Radschlupf, entsprechend korrigiert und genauer bestimmt werden. Weiterhin kann der ermittelte geometrische Radschlupf der kurveninneren Räder in vorteilhafter Weise bei der Schlupfschwellenberechnung schlupfbasierter Steuer- und/oder Regelungsvorrichtungen berücksichtigt werden und dadurch die Genauigkeit der Steuerung und/oder der Regelung erhöht werden. Derartige Vorrichtungen sind beispielsweise Antiblockier-, ASR- und/oder ESP-Systeme.

Der geometrische Schlupf der kurvenäußeren Räder kann als Maß für die mögliche Seitenführung des Fahrzeugs bei Kurvenfahrt herangezogen werden und kann darüber hinaus bei einer sogenannten RAKA-Bestimmung berücksichtigt werden. Die Abkürzung RAKA steht dabei für "Regelabweichung kurvenaußen".

Zur genauen Ermittlung der genannten Kurvenfahrt-Bewegungsgrößen werden weiter unten im Zusammenhang mit der Figurenbeschreibung ausführliche Angaben gemacht.

Zeichnungen

Die Erfindung wird nachfolgend anhand der zugehörigen Zeichnungen noch näher erläutert.

Es zeigen:

Figur 1    ein Blockschaltbild eines erfindungsgemäßen Systems;

Figur 2    ein Flussdiagramm eines erfindungsgemäßen Verfahrens zur Ermittlung von Kurvenfahrt-Bewegungsgrößen des Fahrzeugs;

Figur 3    ein Diagramm, welches die geometrischen Verhältnisse zweier an derselben Fahrzeugseite, links oder rechts, angeordneter Räder bei Kurvenfahrt zeigt.

Beschreibung der Ausführungsbeispiele

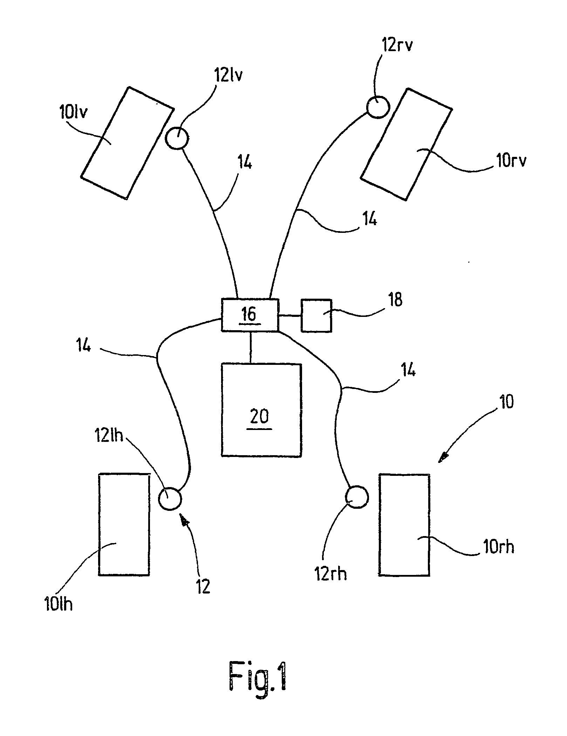

Figur 1 zeigt ein Blockdiagramm eines erfindungsgemäßen Systems. Jedem Rad 10 ist dabei eine Raddrehzahl-Sensoreinrichtung 12 zugeordnet. Das Bezugszeichen 10 der Räder ist zur Kennzeichnung der Position des jeweiligen Rades am Fahrzeug mit zwei Kennbuchstaben versehen. Dabei bedeutet l links, r rechts, v vorne und h hinten. In gleicher Weise sind die den Rädern 10 zugeordneten Sensoreinrichtungen 12 gekennzeichnet.

Die Sensoreinrichtungen 12 sind über Datenleitungen 14 mit einer Datenverarbeitungseinrichtung 16 verbunden. Die Datenverarbeitungseinrichtung 16 ist wiederum mit einer Speichereinrichtung 18 und einem ASR-System 20 zur Datenübertragung verbunden.

Die vorderen Räder 10lv und 10rv sind in dem dargestellten Beispiel lenkbar, die hinteren Räder 10lh und 10rh nicht. Die Sensoreinrichtungen 12 erfassen die Drehzahlen der ihnen jeweils zugeordneten Räder 10 und liefern entsprechende Signale über Datenleitungen 14 an die Datenverarbeitungseinrichtung 16. Die Datenverarbeitungseinrichtung 16 berechnet aus den Raddrehzahlen der nicht angetriebenen Räder eine mittlere translatorische Radgeschwindigkeit der nicht angetriebenen Räder. Die Datenverarbeitungseinrichtung 16 liest zusätzlich Fahrzeuggeometriedaten aus der Speichereinrichtung 18 und ermittelt anhand dieser Geometriedaten und anhand von Radgeschwindigkeitsinformationen eine aktuelle Giergeschwindigkeit, einen Kurvenradius der aktuell durchfahrenen Kurvenbahn, eine Querbeschleunigung sowie einen geometrischen Schlupf der kurveninneren und der kurvenäußeren Räder. Die oben genannten berechneten Größen werden von der Datenverarbeitungseinrichtung 16 schließlich in der Speichereinrichtung 18 hinterlegt, wo sie dem ASR-System 20 zur Verfügung stehen.

Die Sensoreinrichtungen 12 können Teil des ASR-Systems sein, das üblicherweise zur schlupfbasierten Regelung ohnehin über Raddrehzahlsensoren verfügt. Ebenso können die Datenverarbeitungseinrichtung 16 und die Speichereinrichtung 18 Teil des ASR-Systems 20 sein.

Anstelle eines ASR-Systems kann die Vorrichtung 20 auch ein anderes schlupfbasiertes System zur Steuerung oder Regelung des Fahrverhaltens sein, wie etwa ein ESP- oder ein Antiblockiersystem.

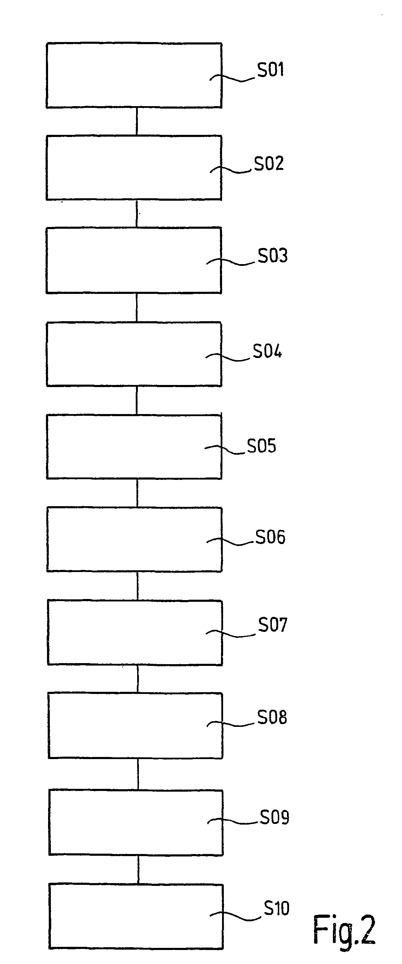

Figur 2 zeigt ein Flussdiagramm einer Ausgestaltungsform des erfindungsgemäßen Verfahrens im Rahmen der vorliegenden Erfindung, wobei die Raddrehzahlen der einzelnen Räder erfasst und daraus Kurvenfahrt-Bewegungsgrößen ermittelt werden. Zunächst wird die Bedeutung der einzelnen Schritte angegeben:

S01:    Erfassen einer momentanen Raddrehzahl eines jeden Rades.
S02:    Ermitteln einer mittleren Radgeschwindigkeit der nicht angetriebenen Räder.
S03:    Ermitteln einer Differenzgeschwindigkeit der nicht angetriebenen Räder.
S04:    Ermitteln einer momentanen Giergeschwindigkeit des Fahrzeugs.
S05:    Ermitteln einer momentanen Querbeschleunigung.
S06:    Ermitteln eines Kurvenradius der momentan durchfahrenen Kurvenbahn.
S07:    Ermitteln eines Radschlupfes.
S08:    Ermitteln eines geometrischen Schlupfes für die kurvenäußeren und die kurveninneren Räder.
S09:    Korrektur des ermittelten Radschlupfes.
S10:    Weiterleiten der ermittelten Daten an die Speichereinrichtung.

Der in Figur 2 gezeigte Verfahrensablauf kann so oder in ähnlicher Weise bei einem heck- oder auch einem frontgetriebenen Fahrzeug erfolgen. In Schritt S01 werden Raddrehzahlen an jedem Rad des Fahrzeugs erfasst und an die Datenverarbeitungseiririchtung 16 weitergeleitet.

Aus dieser Information wird in Schritt S02 zunächst durch Mittelwertbildung eine mittlere Radgeschwindigkeit der nicht angetriebenen Räder $v_{mittel\_nicht\_angetrieben}$ berechnet. Die translatorische Radgeschwindigkeit ergibt sich aus der erfassten Raddrehzahl, multipliziert mit dem Radradius und dem Faktor $2\pi$.

In Schritt S03 wird weiterhin aus den erfassten Raddrehzahlen eine Differenzgeschwindigkeit der nicht angetriebenen Räder $\Delta v_{nicht\_angetrieben}$ ermittelt:

$$\Delta v_{nicht\_angetrieben} = (n_{nicht\_angetrieben\_ka} - n_{nicht\_angetrieben\_ki}) \cdot r_{Rad} \cdot 2\pi \, ,$$

wobei $n_{nicht\_angetrieben\_ki/ka}$ die Raddrehzahlen der nicht angetriebenen kurveninneren (ki) beziehungsweise kurvenäußeren (ka) Räder und $r_{Rad}$ der Radius der Räder ist.

In Schritt S04 wird dann aus der ermittelten mittleren Radgeschwindigkeit der nicht angetriebenen Räder und der Differenzgeschwindigkeit der nicht angetriebenen Räder unter Berücksichtigung von in der Speichereinrichtung 18 hinterlegten Fahrzeuggeometriedaten, wie Spurweite Spw und Radstand L, die momentane Giergeschwindigkeit $\omega$ ermittelt. Dies geschieht beispielsweise über folgende Gleichungen:

a.) Für heckangetriebene Fahrzeuge:

$$\omega = \frac{\Delta v_{nicht\_angetrieben}}{Spw \cdot \cos(\delta)} \cdot \frac{1}{1 + c1 \cdot v_{mittel\_nicht\_angetrieben}^2} \, ,$$

mit $\cos(\delta) = 1 - 0{,}5 \cdot \delta^2$

$$\text{und} \quad \delta = \frac{\Delta v_{nicht\_angetrieben} \cdot L}{Spw \cdot v_{mittel\_nicht\_angetrieben}} = \frac{\Delta v_{nicht\_angetrieben}}{v_{mittel\_nicht\_angetrieben}} \cdot c2$$

b.) Für frontangetriebene Fahrzeuge:

$$\omega = \frac{v_{mittel\_nicht\_angetrieben}}{Spw} \cdot \frac{1}{1 + c1 \cdot v_{mittel\_nicht\_angetrieben}^2} \cdot$$

Dabei sind $c1$ und $c2$ Konstanten.

Im anschließenden Schritt S05 wird eine momentane Querbeschleunigung $a_{quer}$ des Fahrzeugs berechnet. Diese Querbeschleunigung kann dabei beispielsweise durch die erfassten Raddrehzahlen, beziehungsweise der daraus bestimmbaren translatorischen Radgeschwindigkeiten, und der Giergeschwindigkeit des Fahrzeugs bestimmt werden. Sie ergibt sich zum Beispiel aus:

$$a_{quer} = \omega \cdot v_{mittel\_nicht\_angetrieben}$$

Gegebenenfalls kann die Ermittlung der Querbeschleunigung entfallen. Dann kann das dargestellte Verfahren ohne den Schritt S05 ablaufen.

In Schritt S06 wird der Kurvenradius R der aktuell durchfahrenen Kurvenbahn ermittelt. Dies kann beispielsweise aus der bereits ermittelten mittleren translatorischen Radgeschwindigkeit der nicht angetriebenen Räder $v_{mittel\_nicht-angetrieben}$ und der Giergeschwindigkeit $\omega$ erfolgen durch:

$$R = \frac{v_{mittel\_nicht\_angetrieben}}{\omega}$$

Der Kurvenradius kann alternativ auch näherungsweise berechnet werden aus:

$$R = \frac{v_{mittel\_nicht\_angetrieben} \cdot Spw}{\Delta v_{nicht\_angetrieben}}$$

Legt man daher nur auf eine Kenntnis des angenäherten Kurvenradius R Wert, der für die Ermittlung des geometrischen Schlupfes benötigt wird, können die Schritte S04 und S05 im dargestellten Verfahren entfallen. Da jedoch Giergeschwindigkeit und Querbeschleunigung in einfacher Weise nur aus einer Erfassung und Verarbeitung von Raddrehzahlen erhalten und für nachfolgende Regelverfahren genutzt werden können, werden diese Größen in einer bevorzugten Ausführungsform des Verfahrens ermittelt.

In Schritt S07 wird je ein Radschlupf für die kurvenäußeren und die kurveninneren Räder aus den folgenden Gleichungen ermittelt:

$$\lambda_{kurveninnen} = \frac{v_{Vorderrad\_kurveninnen} - v_{Hinterrad\_kurveninnen}}{v_{nicht\_angetrieben\_kurveninnen}} ,$$

$$\lambda_{kurvenaußen} = \frac{V_{Vorderrad\_kurvenaußen} - V_{Hinterrad\_kurvenaußen}}{V_{nicht\_angetrieben\_kurvenaußen}} .$$

$V_{nicht-angetrieben\_kurveninnen}$ ist dabei die translatorische Geschwindigkeit des nicht angetriebenen kurveninneren Rades, das heißt das Vorderrad bei einem heckangetriebenen und das Hinterrad bei einem frontangetriebenen Fahrzeug. Dies gilt analog für die kurvenäußeren Räder.

In Schritt S08 wird der geometrische Schlupf $\lambda_{geom}$ für die kurveninneren und die kurvenäußeren Räder anhand folgender Gleichungen ermittelt:

a.) Für heckangetriebene Fahrzeuge (Indexzusatz HA):

a1.) Für das kurveninnere Radpaar (Indexzusatz ki):

$$\lambda_{geom\_HA\_ki} = 1 - \frac{1}{\sqrt{1 + \left(\dfrac{L \cdot \omega}{V_{Hinterrad\_ki}}\right)^2}}$$

oder vereinfacht als Potenzreihe:

$$\lambda_{geom\_HA\_ki} = 1 - \frac{1}{1 + \dfrac{1}{2} \cdot \left(\dfrac{L \cdot \omega}{V_{Hinterrad\_ki}}\right)^2} .$$

a2.) Für das kurvenäußere Radpaar (Indexzusatz ka) :

$$\lambda_{geom\_HA\_ka} = 1 - \frac{1}{\sqrt{1 + \left(\dfrac{L \cdot \omega}{V_{Hinterrad\_ka}}\right)^2}}$$

oder vereinfacht als Potenzreihe:

$$\lambda_{geom\_HA\_ka} = 1 - \frac{1}{1 + \dfrac{1}{2} \cdot \left(\dfrac{L \cdot \omega}{V_{Hinterrad\_ka}}\right)^2} .$$

b.) Für frontangetriebene Fahrzeuge (Indexzusatz FA):

b1.) Für das kurveninnere Radpaar (Indexzusatz ki) :

$$\lambda_{geom\_FA\_ki} = \sqrt{1 + \left(\frac{L \cdot \omega}{v_{Hinterrad\_ki}}\right)^2} - 1$$

oder vereinfacht als Potenzreihe:

$$\lambda_{geom\_FA\_ki} = \frac{1}{2} \cdot \left(\frac{L \cdot \omega}{v_{Hinterrad\_ki}}\right)^2 .$$

b2.) Für das kurvenäußere Radpaar (Indexzusatz ka) :

$$\lambda_{geom\_FA\_ka} = \sqrt{1 + \left(\frac{L \cdot \omega}{v_{Hinterrad\_ka}}\right)^2} - 1$$

oder vereinfacht als Potenzreihe:

$$\lambda_{geom\_FA\_ka} = \frac{1}{2} \cdot \left(\frac{L \cdot \omega}{v_{Hinterrad\_ka}}\right)^2 .$$

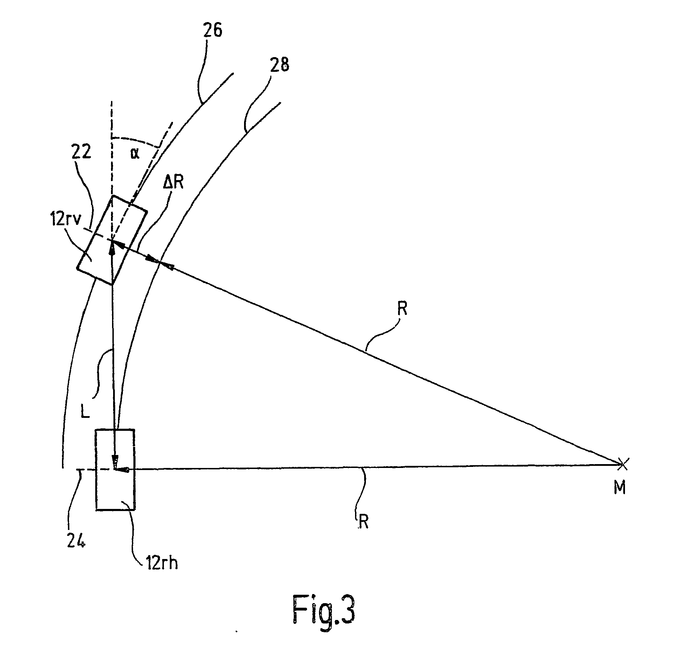

Mit $v_{Vorderrad}$ oder $v_{Hinterrad}$ ist die translatorische Geschwindigkeit des Vorderrades beziehungsweise Hinterrades bezeichnet. Mit dem Indexzusatz "ki" oder "ka" wird angegeben, welche Vorderrad- und welche Hinterrad-Geschwindigkeit, die des kurveninneren oder die des kurvenäußeren Rades, einzusetzen ist. Die verwendeten Gleichungen werden unten in Verbindung mit Fig. 3 näher erläutert werden.

In Schritt S09 werden die zuvor in Schritt S07 ermittelten Werte für den Radschlupf des kurveninneren Radpaars und des kurvenäußeren Radpaars durch die in Schritt S08 ermittelten Werte des geometrischen Radschlupfs korrigiert.

Die korrigierten Radschlupfwerte, die ermittelten Werte des geometrischen Radschlupfs, der ermittelte Kurvenradius, die ermittelte Querbeschleunigung, die ermittelte Giergeschwindigkeit, die mittlere Radgeschwindigkeit der nicht angetriebenen Räder, die Differenzgeschwindigkeit der nicht angetriebenen Räder und gegebenenfalls die einzelnen erfassten Raddrehzahlen werden anschließend in Schritt S10 an die Speichereinrichtung weitergeleitet, wo sie dem ASR-System für Berücksichtigung bei einer Regelung des Fahrverhaltens zur Verfügung stehen.

In Figur 3 ist beispielhaft das rechte Vorderrad 12rv und das rechte Hinterrad 12rh von Figur 1 als kurveninneres Radpaar bei einer Kurvenfahrt in einer Rechtskurve gezeigt. Die Entfernung des Vorderrades 12rv vom Hinterrad 12rh entspricht dem Radstand L. Das Vorderrad 12rv ist um einen Lenkwinkel α nach rechts eingeschlagen.

Die Räder gehorchen, wie bei einer Achsschenkellenkung üblich, der Ackermann-Bedingung, das heißt die verlängerten Drehachsen 22 des rechten Vorderrads 12rv und 24 des rechten Hinterrads 12rh schneiden sich im Momentanpol M auf der Verlängerung der Hinterachse. Um diesen Momentanpol M dreht das Fahrzeug augenblicklich.

Da das rechte Hinterrad 12rh eine Entfernung R vom Momentanpol M, das rechte Vorderrad 12rv vom Momentanpol M jedoch eine um ΔR größere Entfernung R+ΔR aufweist, rollen die Räder mit unterschiedlichen Geschwindigkeiten auf konzentrischen Kreistrajektorien 26 und 28 mit dem Momentanpol M als Mittelpunkt ab.

Die Entfernung R des Hinterrads 12rh vom Momentanpol M wird näherungsweise als der Kurvenradius der akutell durchfahrenen Kurvenbahn angenommen. Geht man alternativ von einem als Abstand des Momentanpols M vom Fahrzeugmittelpunkt (nicht dargestellt) definierten Kurvenradius R' aus, so kann man unter Berücksichtigung der bekannten Spurweite Spw des Fahrzeugs den Abstand R vom Momentanpol M für die kurveninneren Räder als R=R'-½Spw und entsprechend für die kurvenäußeren Räder als R=R'+½Spw bestimmen. Der Kurvenradius kann wie zuvor angegeben ermittelt werden.

Aufgrund der unterschiedlichen Abrollgeschwindigkeiten (das Vorderrad dreht aufgrund der größeren Entfernung vom Momentanpol M schneller) kann bei der Radschlupfberechnung ein Fehler auftreten. Der Radschlupf für ein kurveninneres oder kurvenäußeres Radpaar wird wie folgt berechnet:

$$\lambda = \frac{V_{Vorderrad} - V_{Hinterrad}}{V_{nicht\_angetrieben}}$$

Die Bedeutung der einzelnen Formelzeichen wurde bereits oben erläutert. Die translatorische Radmittelpunktsgeschwindigkeit ergibt sich für jedes Rad aus dem Produkt der Entfernung des jeweiligen Rades zum Momentanpol M und der Giergeschwindigkeit $\omega$.

Für einen Frontantrieb mit einem nicht angetriebenen Hinterrad gilt daher:

$$\lambda_{geom\_FA} = \frac{(R + \Delta R) \cdot \omega - R \cdot \omega}{R \cdot \omega} \, .$$

Nach Kürzen der Giergeschwindigkeit und Berechnung von R + ΔR durch Pythagoras ergibt sich:

$$\lambda_{geom\_FA} = \frac{\sqrt{(R^2 + L^2)} - R}{R} \equiv \sqrt{1 + \left(\frac{L}{R}\right)^2} - 1$$

mit R=$v_{nicht\_angetrieben}$/$\omega$ ergibt sich weiter:

$$\lambda_{geom\_FA} = \sqrt{1 + \left(\frac{L \cdot \omega}{V_{nicht\_angetrieben}}\right)^2} - 1 \equiv \sqrt{1 + \left(\frac{L \cdot \omega}{V_{Hinterrad}}\right)^2} - 1$$

Zur einfacheren Berechnung durch elektronische Rechenanlagen kann die Wurzel als Potenzreihe ($\sqrt{1 + x} = 1 + \frac{1}{2} \cdot x$ für kleine x) ausgedrückt werden. Dann folgt für $\lambda_{geom\_FA}$ :

$$\lambda_{geom\_FA} = \frac{1}{2} \cdot \left(\frac{L \cdot \omega}{V_{Hinterrad}}\right)^2$$

Für einen Heckantrieb mit nicht angetriebenen Vorderrädern gilt entsprechend:

$$\lambda_{geom\_HA} = \frac{(R + \Delta R) \cdot \omega - R \cdot \omega}{(R + \Delta R) \cdot \omega}$$

Nach Kürzen der Giergeschwindigkeit und Berechnung von R + ΔR durch Pythagoras ergibt sich:

$$\lambda_{geom\_HA} = \frac{\sqrt{(R^2 + L^2)} - R}{\sqrt{(R^2 + L^2)}} \equiv 1 - \frac{1}{\sqrt{1 + \left(\dfrac{L}{R}\right)^2}}$$

mit R=$v_{angetrieben}$/$\omega$ ergibt sich weiter:

$$\lambda_{geom\_HA} = 1 - \frac{1}{\sqrt{1 + \left(\dfrac{L \cdot \omega}{v_{angetrieben}}\right)^2}} \equiv 1 - \frac{1}{\sqrt{1 + \left(\dfrac{L \cdot \omega}{v_{Hinterrad}}\right)^2}}$$

Zur einfacheren Berechnung durch elektronische Rechenanlagen kann die Wurzel wiederum als Potenzreihe ausgedrückt werden:

$$\lambda_{geom\_HA} = 1 - \frac{1}{1 + \dfrac{1}{2} \cdot \left(\dfrac{L \cdot \varpi}{v_{H\,int\,errad}}\right)^2}$$

Es ist klar, dass der geometrische Radschlupf für ein kurveninneres Radpaar durch Verwenden entsprechender Radgeschwindigkeiten kurveninnerer Räder und der geometrische Radschlupf für ein kurvenäußeres Radpaar durch Verwenden entsprechender Radgeschwindigkeiten kurvenäußerer Räder erhalten wird.

**Patentansprüche**

1. System zur Steuerung und/oder Regelung des Fahrverhaltens eines Kraftfahrzeugs mit wenigstens zwei Rädern, mit wenigstens einer Sensoreinrichtung (12), welche eine Raddrehzahl von wenigstens zwei Rädern (10) erfasst, und einer Datenverarbeitungseinrichtung (16), welche nach Maßgabe der erfassten Raddrehzahlen wenigstens eine Bewegungsbeziehung von wenigstens zwei Rädern (10) zueinander bestimmt, wobei die Datenverarbeitungseinrichtung (16) weiterhin nach Maßgabe der wenigstens einen bestimmten Bewegungsbeziehung einen geometrischen Radschlupf als Kurvenfahrt-Bewegungsgröße des Kraftfahrzeugs ermittelt und mit diesem einen aus den erfassten Raddrehzahlen errechneten Radschlupf korrigiert, **dadurch gekennzeichnet, dass** die Datenverarbeitungseinrichtung (16) den geometrischen Radschlupf für eine kurveninnere und eine kurvenäußere Fahrzeugseite anhand des Radstands des Kraftfahrzeugs und des Abstands eines kurveninneren Rades zu einem Momentanpol des Kraftfahrzeugs oder anhand des Radstands des Kraftfahrzeugs, der Giergeschwindigkeit des Kraftfahrzeugs und einer Raddrehzahl wenigstens eines Rades der kurveninneren beziehungsweise kurvenäußeren Fahrzeugseite ermittelt.

2. System nach Anspruch 1, **dadurch gekennzeichnet, dass** wenigstens zwei in Fahrzeugquerrichtung einander gegenüberliegenden Rädern (10), bevorzugt auch wenigstens zwei in Fahrzeuglängsrichtung hintereinander angeordneten Rädern (10), besonders bevorzugt jedem Rad (10) des Fahrzeugs, je eine Sensoreinrichtung (12) zugeordnet ist.

3. System nach einem der vorhergehenden Ansprüche, **dadurch gekennzeichnet, dass** die wenigstens eine Sensoreinrichtung (12) eine Reifen-Sensoreinrichtung und/oder eine Radlager-Sensoreinrichtung ist.

4. System nach einem der vorhergehenden Ansprüche, **dadurch gekennzeichnet, dass** es eine Speichereinrichtung (18) zur Speicherung von erfassten und/oder ermittelten Werten sowie zur Hinterlegung vorbestimmter Fahrzeuggeometriedaten umfasst.

5. System nach einem der vorhergehenden Ansprüche, **dadurch gekennzeichnet,**

   - **dass** die Datenverarbeitungseinrichtung (16) nach Maßgabe der ermittelten Kurvenfahrt-Bewegungsgröße ein Stellsignal ausgibt und
   - **dass** das System weiterhin eine Stelleinrichtung (20) umfasst, die einen Betriebszustand des Kraftfahrzeugs nach Maßgabe des Stellsignals beeinflusst.

6. System nach einem der vorhergehenden Ansprüche, **dadurch gekennzeichnet, dass** die Datenverarbeitungseinrichtung (16) und/oder die Stelleinrichtung (20) einer Vorrichtung (20) zur Steuerung und/oder Regelung des Fahrverhaltens eines Kraftfahrzeugs, wie zum Beispiel einem ASR- (20), einem Antiblockier- oder einem ESP-System, zugeordnet ist beziehungsweise sind.

7. System nach einem der vorhergehenden Ansprüche, **dadurch gekennzeichnet, dass** die Vorrichtung (20) zur Steuerung und/oder Regelung des Fahrverhaltens eines Kraftfahrzeugs Steuer- und/oder Regelalgorithmen in Abhängigkeit von der ermittelten wenigstens einen Kurvenfahrt-Bewegungsgröße auswählt.

8. System nach einem der vorhergehenden Ansprüche, **dadurch gekennzeichnet, dass** die Stellvorrichtung (20) einem ASR-System (20) zugeordnet ist, welches in Abhängigkeit vom ermittelten Kurvenradius, vorzugsweise unter Berücksichtigung der Fahrzeuggeschwindigkeit, zwischen traktionspriorisierter und fahrstabilitätspriorisierter Regelung schaltet.

9. Verfahren zur Steuerung und/oder Regelung des Fahrverhaltens eines Kraftfahrzeugs mit wenigstens zwei Rädern, umfassend folgende Schritte:

   - Erfassen einer Raddrehzahl von wenigstens zwei Rädern (S01),
   - Bestimmen wenigstens einer Bewegungsbeziehung von wenigstens zwei Rädern nach Maßgabe der erfassten Raddrehzahlen (S03),
   - Ermitteln eines geometrischen Radschlupfs (S08) als Kurvenfahrt-Bewegungsgröße des Kraftfahrzeugs nach Maßgabe der bestimmten Bewegungsbeziehung (S04,S05,S06,S08), und
   - Korrigieren eines ermittelten Radschlupfs bei Kurvenfahrt um den ermittelten geometrischen Radschlupf (S09),

   **dadurch gekennzeichnet, dass** der geometrische Radschlupf für die kurveninnere und kurvenäußere Fahrzeugseite anhand des Radstands des Kraftfahrzeugs und des Abstands eines kurveninneren Rades zu einem Momentanpol des Kraftfahrzeugs oder anhand des Radstands des Kraftfahrzeugs, der Giergeschwindigkeit des Kraftfahrzeugs und einer Raddrehzahl wenigstens eines Rades der kurveninneren beziehungsweise kurvenäußeren Fahrzeugseite ermittelt wird.

10. Verfahren nach Anspruch 9, **dadurch gekennzeichnet, dass** der Schritt (S03) der Bestimmung der Bewegungsbeziehung eine Bestimmung einer Drehzahldifferenz von zwei Rädern umfasst (S03).

11. Verfahren nach Anspruch 9 oder 10 **dadurch gekennzeichnet, dass** die Giergeschwindigkeit anhand einer Differenzgeschwindigkeit von in Fahrzeugquerrichtung im Wesentlichen einander gegenüberliegenden Rädern, einer Spurweite des Fahrzeugs, einem Radstand des Fahrzeugs und der Raddrehzahlen nicht angetriebener Räder ermittelt wird.

12. Verfahren nach einem der Ansprüche 9 bis 11, **dadurch gekennzeichnet, dass** der Kurvenradius und die Querbeschleunigung anhand der Raddrehzahlen nicht angetriebener Räder und der Giergeschwindigkeit ermittelt werden.

13. Verfahren nach einem der Ansprüche 9 bis 12, **dadurch gekennzeichnet, dass** der ermittelte geometrische Radschlupf der kurvenäußeren Räder bei der Schlupfschwellenberechnung schlupfbasierter Steuer- und/oder Regelungsvorrichtungen, wie zum Beispiel ein Antiblockier- und/oder ein ASR-System, berücksichtigt wird.

**Claims**

1. System for performing open-loop and/or closed-loop control of the handling characteristics of a motor vehicle having at least two wheels, having at least one sensor device (12), which senses a wheel speed of at least two wheels (10), and a data processing device (16), which determines at least one movement relationship of at least two wheels (10) with respect to one another in accordance with the sensed wheel speeds, wherein the data processing device (16) also determines, in accordance with the at least one determined movement relationship, a geometric wheel slip as a cornering movement variable of the motor vehicle and uses the latter to correct a wheel slip calculated from the sensed wheel speeds, **characterized in that** the data processing device (16) determines the geometric wheel slip for a vehicle side on the inside of a bend and a vehicle side on the outside of a bend on the basis of the wheel base of the motor vehicle and the distance between a wheel on the inside of the bend and an instantaneous pole of the motor vehicle or on the basis of the wheel base of the motor vehicle, the yaw rate of the motor vehicle and a wheel speed of at least one wheel of the vehicle side on the inside of the bend or vehicle side on the outside of the bend.

2. System according to Claim 1, **characterized in that** at least one sensor device (12) is assigned in each case to two wheels (10) which lie opposite one another in the transverse direction of the vehicle, preferably also at least two wheels (10) which are arranged one behind the other in the longitudinal direction of the vehicle, particularly preferably to each wheel (10) of the vehicle.

3. System according to one of the preceding claims, **characterized in that** the at least one sensor device (12) is a tyre sensor device and/or a wheel bearing sensor device.

4. System according to one of the preceding claims, **characterized in that** said system comprises a memory device (18) for storing sensed and/or determined values and for storing predetermined vehicle geometry data.

5. System according to one of the preceding claims, **characterized**

   - **in that** the data processing device (16) outputs an actuation signal in accordance with the determined cornering movement variable, and
   - **in that** the system also comprises an actuating device (20) which influences an operating state of the motor vehicle in accordance with the actuation signal.

6. System according to one of the preceding claims, **characterized in that** the data processing device (16) and/or the actuating device (20) are/is assigned to a device (20) for performing open-loop and/or closed-loop control of the handling characteristics of a motor vehicle, such as for example a traction control system (20), an antilock brake system or an ESP system.

7. System according to one of the preceding claims, **characterized in that** the device (20) for performing open-loop and/or closed-loop control of the handling characteristics of a motor vehicle selects open-loop and/or closed-loop control algorithms as a function of the determined at least one cornering movement variable.

8. System according to one of the preceding claims, **characterized in that** the actuating device (20) is assigned to a traction control system (20) which switches between a traction-prioritized closed-loop control operation and driving-stability-prioritized closed-loop control operation as a function of the determined bend radius, preferably taking into account the vehicle speed.

9. Method for performing open-loop and/or closed-loop control of the handling characteristics of a motor vehicle having at least two wheels, comprising the following steps:

   - sensing of a wheel speed of at least two wheels (S01),
   - determination of at least one movement relationship of at least two wheels in accordance with the sensed wheel speeds (S03),
   - determination of a geometric wheel slip (S08) as a cornering movement variable of the motor vehicle in accordance with the determined movement relationship (S04, S05, S06, S08), and
   - correction of a determined wheel slip in the case of cornering by the determined geometric wheel slip (S09),

   **characterized in that** the geometric wheel slip for the vehicle side on the inside of the bend and the vehicle side on the outside of the bend is determined on the basis of the wheel base of the motor vehicle and the distance between a wheel on the inside of the bend and an instantaneous pole of the motor vehicle or on the basis of the wheel base of the motor vehicle, the yaw rate of the motor vehicle and a wheel speed of at least one wheel on the vehicle side on the inside of the bend or on the vehicle side on the outside of the bend.

10. Method according to Claim 9, **characterized in that** the step (S03) of determining the movement relationship comprises determining a difference between rotational speeds of two wheels (S03).

11. Method according to Claim 9 or 10, **characterized in that** the yaw rate is determined on the basis of a differential speed of wheels which lie essentially opposite one another in the transverse direction of the vehicle, a wheel gauge of the vehicle, a wheel base of the vehicle and the wheel speeds of non-driven wheels.

12. Method according to one of Claims 9 to 11, **characterized in that** the bend radius and the transverse acceleration are determined on the basis of the wheel speeds of non-driven wheels and of the yaw rate.

13. Method according to one of Claims 9 to 12, **characterized in that** the determined geometric wheel slip of the wheels on the outside of the bend is taken into account in the calculation of the slip threshold of slip-based open-loop and/or closed-loop control devices, such as, for example an anti-block brake system and/or a traction control system.

## Revendications

1. Système de commande et/ou de régulation du comportement de roulage d'un véhicule automobile qui présente au moins deux roues, le système présentant
   au moins un dispositif de détection (12) qui saisit la vitesse de rotation d'au moins deux roues (10) et un dispositif (16) de traitement de données qui détermine au moins une équation de déplacement d'au moins deux roues (10) sur la base de la vitesse de rotation saisie sur les roues,
   le dispositif (16) de traitement de données déterminant en outre sur la base de la ou des équations de déplacement définies le patinage géométrique des roues en tant que grandeur de déplacement du véhicule automobile en virage et corrigeant avec cette dernière le patinage des roues calculé à partir des vitesses de rotation saisies sur les roues,
   **caractérisé en ce que**
   le dispositif (16) de traitement de données détermine le patinage géométrique des roues pour le côté du véhicule situé à l'intérieur du virage et le côté du véhicule situé à l'extérieur du virage sur la base de l'empattement des roues du véhicule et de la distance entre la roue située à l'intérieur du virage et un pôle instantané du véhicule automobile ou sur la base de l'empattement des roues du véhicule automobile, de la vitesse de lacet du véhicule automobile et de la vitesse de rotation d'au moins une roue située sur le côté du véhicule situé à l'intérieur du virage ou sur le côté du véhicule situé à l'extérieur du virage.

2. Système selon la revendication 1, **caractérisé en ce qu'**un dispositif de détection (12) est associé respectivement à au moins deux roues (10) situées l'une en face de l'autre dans la direction transversale par rapport au véhicule, de préférence également à au moins deux roues (10) disposées l'une derrière l'autre dans le sens de la longueur du véhicule et de façon particulièrement préférable à chaque roue (10) du véhicule.

3. Système selon l'une des revendications précédentes, **caractérisé en ce que** le ou les dispositifs de détection (12) sont des dispositifs de détection sur bandage de roue et/ou des dispositifs de détection sur palier de roue.

4. Système selon l'une des revendications précédentes, **caractérisé en ce qu'**il comporte un dispositif de mémoire (18) qui conserve en mémoire des valeurs saisies et/ou des valeurs déterminées et qui conserve également des données prédéterminées de la géométrie du véhicule.

5. Système selon l'une des revendications précédentes, **caractérisé en ce que** le dispositif (16) de traitement de données délivre un signal de réglage en fonction de la grandeur déterminée du déplacement en virage et **en ce que** le système comporte en outre un dispositif de réglage (20) qui agit sur l'état de fonctionnement du véhicule automobile en fonction du signal de réglage.

6. Système selon l'une des revendications précédentes, **caractérisé en ce que** le dispositif (16) de traitement de données et/ou le dispositif de réglage (20) sont associés à un dispositif (20) de commande et/ou de régulation du comportement de roulage du véhicule automobile, par exemple un système ASR (20), un système antiblocage ou un système ESP, ou sont ces systèmes.

7. Système selon l'une des revendications précédentes, **caractérisé en ce que** le dispositif (20) de commande et/ou de régulation du comportement de roulage d'un véhicule automobile sélectionne des algorithmes de commande et/ou de régulation en fonction de la ou des grandeurs de déplacement en virage qui ont été déterminées.

8. Système selon l'une des revendications précédente, **caractérisé en ce que** le dispositif de réglage (20) est associé à un système ASR (20) qui commute entre une régulation prioritaire de la traction et une régulation prioritaire de la stabilité de roulage en fonction du rayon déterminé pour le virage, de préférence en tenant compte de la vitesse du véhicule.

9. Procédé de commande et/ou de régulation du comportement de roulage d'un véhicule automobile qui présente au moins deux roues, le procédé comportant les étapes qui consistent à :

   - saisir la vitesse de rotation d'au moins deux roues (S01),
   - déterminer au moins une équation de déplacement d'au moins deux roues en fonction des vitesses de rotation saisies sur les roues (S03),
   - déterminer un patinage géométrique des roues (S08) en tant que grandeur de déplacement du véhicule automobile en virage sur la base de l'équation définie de déplacement (S04, S05, S06, S08) et
   - corriger du patinage géométrique déterminé le patinage des roues ainsi déterminé en virage (S09), **caractérisé en ce que**

   le patinage géométrique des roues est déterminé pour le côté du véhicule situé à l'intérieur du virage et le côté du véhicule situé à l'extérieur du virage sur la base de l'empattement des roues du véhicule et de la distance entre la roue située à l'intérieur du virage et un pôle instantané du véhicule automobile ou sur la base de l'empattement des roues du véhicule automobile, de la vitesse de lacet du véhicule automobile et de la vitesse de rotation d'au moins une roue située sur le côté du véhicule situé à l'intérieur du virage ou sur le côté du véhicule situé à l'extérieur du virage.

10. Procédé selon la revendication 9, **caractérisé en ce que** l'étape (S03) de détermination de l'équation de déplacement comporte la détermination de la différence entre les vitesses de rotation de deux roues (S03).

11. Procédé selon les revendications 9 ou 10, **caractérisé en ce que** la vitesse de lacet est déterminée sur la base de la différence de vitesse de roues situées essentiellement l'une en face de l'autre dans le sens transversal du véhicule, de l'écart entre les roues du véhicule, de l'empattement des roues du véhicule et des vitesses de rotation des roues non motrices.

12. Procédé selon l'une des revendications 9 à 11, **caractérisé en ce que** le rayon du virage et l'accélération transversale sont déterminés à l'aide des vitesses de rotation des roues non motrices et de la vitesse de lacet.

13. Procédé selon l'une des revendications 9 à 12, **caractérisé en ce que** le patinage géométrique déterminé pour les roues situées à l'extérieur du virage est pris en compte dans le calcul du seuil de patinage de dispositifs de commande et/ou de régulation travaillant sur la base du patinage, par exemple un système antiblocage et/ou un système ASR.

Fig.1

S01

S02

S03

S04

S05

S06

S07

S08

S09

S10

Fig.2

Fig.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19750501 A
- EP 0552456 A